# NEW EUROPEAN PATENT SPECIFICATION

(11) **EP 0 477 920 B2**
(45) Date of publication and mention of the opposition decision: **27.12.2000**
(45) Mention of the grant of the patent: 09.04.1997
(21) Application number: 91116366.5
(22) Date of filing: 25.09.1991
(51) Int. Cl.: C08G 18/40, C08J 9/12

(54) **Process for preparing articles of polyurethane foams**
Verfahren zur Herstellung von Polyurethanschaumartikeln
Procédé pour la préparation des articles de mousse de polyuréthane

(30) Priority: 26.09.1990 IT 2158090
(43) Date of publication of application: 01.04.1992
(73) Proprietor: ENICHEM S.p.A., 20124 Milano (IT)
(72) Inventor: Lunardon, Gianflavio, Dr., I-35139 Padova (IT); Cecchini, Corrado, Dr., I-30030 Salzano, Venice (IT); Ciriello, Luciano, I-30015 Chioggia, Venice (IT); Cancellier, Vito, I-30027 San Dona' di Piave, Venice (IT)
(74) Representative: Weinhold, Peter, Dr.rer.nat. Dipl.-Chem.

(56) References cited:
- EP-A- 0 330 988
- EP-A- 0 345 580
- EP-A- 0 351 614
- EP-A- 0 381 986
- EP-A- 0 432 672
- EP-A- 0 450 308
- DE-A- 3 402 310
- US-A- 3 391 093
- US-A- 4 444 915
- US-A- 4 997 706
- Derwent Abstract of JP-A-1135822
- R. Wiedermann, G. Heilig : Alternative Blähmittel für PUR-HArtschaumstoffe, Kunststoffe, August 1990, S. 909-910

## Description

The present invention relates to a process for preparing formed articles made of polyurethane foams.

The term "polyurethane foams", whenever used in the present specification and in the appended claims, denotes both rigid polyurethane foams and flexible, soft or extra-soft and elastic polyurethane foams.

Polyurethane foams are utilized for several applications and are generally produced by reacting a formulated polyol with a polyisocyanate, in particular 2,4/2,6-toluene diisocyanate (TDI) and 4,4'-diphenylmethane diisocyanate (MDI) and higher homologs or modifications thereof, using, as expanding agents, monofluorotrichloromethane (also known as CFC 11) or other halogenated or hydrohalogenated chlorine-containing hydrocarbons.

Some of said expanding agents, in particular CFC 11, have been included by the Montreal Protocol in the list of fluoroalkanes considered harmful to the environment as they contribute to the alteration and destruction of the ozone layer in the stratosphere. Other expanding agents such as difluoromonochloromethane are also under scrutiny as they exhibit an ODP (Ozone Depletion Potential) higher than zero. Therefore, a gradual elimination thereof has become necessary.

One route followed at present is the generalized recourse to the expansion with CO₂, generally generated by the isocyanate-water reaction.

However, the use of high water concentrations in the formulations, and consequently of high CO₂ concentrations in the foams, results in considerable drawbacks. Some of these drawbacks are listed below.
a) In rigid foams:
   - higher initial thermal conductivity;
   - faster increase in the thermal conductivity in the course of time due to the higher CO₂ permeability of the polymer, with consequent inlet of air;
   - dimensional instability of the foam in hot condition;
   - higher surface friability with consequent problems concerning the adhesion to various substrates;
   - higher exothermicity of the isocyanate-polyol reaction with consequent deformation phenomena of the manufactured articles;
   - higher isocyanate consumption.
b) In flexible foams:
   - higher exothermicity with possible thermal degradation phenomena of the polymer;
   - greater problems regarding the water compatibility in the system with consequent loss of the balance between the foaming and polymer formation reactions and possible collapse and breaking phenomena in the foams;
   - higher isocyanate consumption;
   - difficulty in obtaining low bearing capacity and low density foams (D ≤ 35 kg/m³ and bearing capacity ≤ 150 N at 40% of compression according to ISO 2439);
   - impossibility of obtaining "integral skin" foams.

An alternative to the CO₂ generated by the isocyanate-water reaction is the use of liquid CO₂ in admixture with one or both polyurethane reactants. However, this approach also did not yield the desired results.

To obviate the above drawbacks it is necessary to find foaming agents which are an alternative to the chlorine-containing halogenated or hydrohalogenated hydrocarbons now in use, and the utilization of which is not limited by the Montreal Protocol or by any other agreements.

Another essential condition is that said new foaming agents should be utilizable by means of industrial technologies not different from those employed at present and that the properties of the final polyurethanes should not be worse than those of the polyurethanes obtained, for example, with CFC 11.

EP 0 450 308 A2 describes a process for the production of polyurethane foams comprising reacting a polyisocyanate with a compound having two hydrogen atoms reactive with the isocyanate groups in the presence of an expanding agent and, optionally, further additives. In the examples a combination of fluoroalkanes and carbon dioxide is used as the expanding agent in the presence of a combination of ethylene diamine/propylene oxide-polyether and dimethyl cyclohexylamine, which latter is not used for the purposes of the present invention.

EP-A-351,614 describes the preparation of polyurethane foams in the presence of non-harmful foaming agents selected from perfluorinated alkanes having 3 to 8 carbon atoms. However, these perfluoroalkanes exhibit a low efficiency as foaming agents since - due to the fact that they are not dilutable with any of the polyurethane reactants - they must be emulsified mechanically, using stabilizers of complex nature, and utilized in this form as foaming agents. Furthermore, owing to their low efficiency as foaming agents, they require high amounts of water as expanding co-agent.

There has now been found a process for preparing polyurethane foams which permits to utilize, as expanding medium, products similar to those of the art but which are not included in the Montreal Protocol or any other agreements as they do not contain chlorine. Additionally they are not affected by the drawbacks associated with the use of considerable amounts of CO₂, meet all of the above requirements and can easily be dissolved in one of said two polyurethane reactants. In fact it has been found that the presence of products containing structural units of the amine type, either chemically bound or present in free form (i.e. merely physically mixed) in one of said two polyurethane reactants, permits to promptly dissolve chlorinefree fluorinated hydrocarbons (alkanes) in amounts sufficient to produce foams of excellent quality.

Thus, the present invention provides a process for preparing formed articles made of polyurethane foams, which comprises reacting at least one polyisocyanate (a) with at least one polyether polyol (b) containing activated terminal hydrogen atoms in the presence of an expanding agent which consists of at least one hydrofluoroalkane and/or perfluoroalkane, possibly in admixture with water, and of a product (c) of general formula (I) as defined hereinafter containing at least one structural unit of the amine type, chemically bound or present in free form in one of the two polyurethane reactants (a) and (b), said expanding agent being dissolved in said one of said two polyurethane reagents in amounts such that the amino group is present at a concentration of at least 0.03 mols per 100 g of the component in which the expanding medium is dissolved. The expanding agent, which consists of at least one hydrofluoroalkane and/or perfluoroalkane, possibly in admixture with water, can be dissolved in the polyisocyanate (a) and/or in the compound (b) containing activated terminal hydrogen atoms, although it is preferred to dissolve the foaming agent in reactant (b).

The expanding agent is added to one of the polyurethane reactants (a) and (b) in amounts which are a function of the type of polyurethane foam to be produced. Amounts of at least 1 and preferably higher than 1 part by weight per 100 parts by weight of polyurethane reactant, particularly from 5 to 50 parts per 100 parts, are, however, most suitable.

The products (c) which, according to the present invention, contain structural units of the amine type are those of general formula (I): 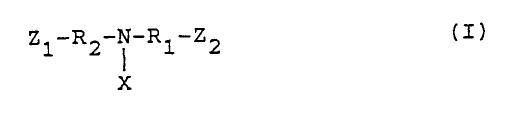 wherein
- X: represents hydrogen, Z₁-R₂- or Z₂-R₁-;
- Z₁ and Z₂,: the same or different from each other, represent hydrogen, OH, NH₂ and NHR₃, R₃ representing an alkyl, cycloalkyl, aryl or alkylaryl radical having from 1 to 12 carbon atoms;
- R₁ and R₂,: the same or different from each other, represent an alkylene, cycloalkylene, arylene or alkylarylene radical containing 1 to 20 carbon atoms or are polyoxyalkylene chains having an average molecular weight of from 60 to 8,000, the alkylene groups containing from 1 to 4 carbon atoms,
with the exception of dimethyl cyclohexylamine.

The product (c) containing at least one structural unit of the amine type, either used in free form or chemically bound, is utilized in amounts such that the amino group(s) is (are) present at a concentration of at least 0.03 moles, preferably at least 0.05 moles, per 100 g of the component (reactant) in which the foaming agent is dissolved and may be employed in amounts as high as 1 mole per 100 g.

Any method suited to dissolve the foaming agent in one of the polyurethane reactants (a) and (b) can be utilized in the process of the present invention.

For example, the dissolution step can be conducted in a closed vessel, by operating continuously, semicontinuously or discontinuously at room temperature and feeding the hydrofluoroalkane and/or perfluoroalkane in the liquid state.

The mixing can take place either under mild stirring for extended periods of time (e.g. of the order of 2 to 4 hours) or under quick and turbulent stirring for less than 40 minutes, for example from 10 to 40 minutes, using high specific energy mixers.

The admixture of the foaming agent can be carried out directly in the mixing head of a foaming machine.

In particular, a preferred process for preparing formed articles made of polyurethane foams comprises the step of reacting at least one component based on a polyisocyanate (a) with at least one second component based on a polyether polyol (b) containing activated terminal hydrogen atoms in the presence of a foaming medium and, in the amount specified above of a product (c) of formula (I) containing at least one structural unit of the amine type, chemically bound or present in free form in one of the two polyurethane reactants, said foaming medium consisting of at least one hydrofluoroalkane and/or perfluoroalkane, possibly in admixture with water, dissolved in said one of said two polyurethane reactants, and the dissolution of the foaming agent being carried out by means of stirring in a closed vessel under an initial pressure close to the feeding pressure of said foaming agent and stirring being maintained and continued, either continuously or discontinuously, for a time sufficient to cause a pressure decrease by absorption of the foaming agent in the polyurethane reactant.

The feasibility of the use of hydrofluoroalkanes and/or perfluoroalkanes as foaming agents for polyurethane foams, according to the present invention has to be considered surprising as these products, although having boiling points (at ambient pressure) of even lower than 0°C and although they are hardly soluble under the conditions usually described in the art, give rise to stable homogeneous mixtures which, above all, exhibit a low vapor tension, generally lower than 0.4 MPa (4 bars). Therefore, these mixtures can be stored for relatively long periods of time and can be transferred without difficulty into the feeding tanks of the foaming machines, wherefrom they are withdrawn for being reacted, by means of any technology, in the production of homogeneous articles showing an excellent density. Examples of technologies which are utilizable in combination with the process of the present invention are those described, e.g., in Saunders and Frisch, "Polyurethanes, Chemistry and Technology", Interscience, New York, 1964.

Rigid and non-rigid foams at any density, produced according to the well-known Reaction Injection Moulding technology (RIM) or according to the frothing technology, can also be obtained by the process described herein.

Under the conditions of the present process, the loss of foaming agent is extremely low. In fact, as the foaming agent is efficaciously retained, it leads to a regular foaming with obtainment of foams having a regular cellular structure and improved physico-mechanical characteristics, as to homogeneity and low dispersion of the data, as compared with those obtained under conditions in which the homogenization of the hydrofluoroalkane and/or perfluoroalkane in one of the two reactants is not complete.

In particular, as regards the rigid foams, in comparison with the not best modalities of use of the foaming agent of the present invention, the following advantages are obtained:
- higher flowability of the foam with consequent easy filling of the voids;
- lower thermal conductivity of the foam, with values similar to those obtainable with CFC 11;
- higher stability of the foam in hot condition;
- increase, with time, of the thermal conductivity, comparable with that of foams foamed by means of CFC 11.

Any organic polyisocyanate capable of providing polyurethane foams can be utilized in the process of the present invention, although aliphatic, cycloalphatic and aromatic polyisocyanates and the corresponding alkyl-substituted derivatives are preferred.

In particular it is possible to use low molecular weight diisocyanates having general formula (II):

OCN-R-NCO (II)

where R is an aliphatic, cycloaliphatic or aromatic, optionally alkyl-substituted radical having 1 to 30 (preferably 2 to 20) carbon atoms. Specific examples thereof are 2,2,4-trimethylhexamethylene diisocyanate, ethylidene diisocyanate, butylene diisocyanate, hexamethylene diisocyanate, cyclohexylene-1,4-diisocyanate, cyclohexylene-1,2-diisocyanate, dichlorohexamethylene diisocyanate, xylylene diisocyanate, meta- and/or para-phenylene diisocyanate, 2,4-toluene diisocyanate (alone or in admixture with its isomer 2,6-toluene diisocyanate), 4,4'-diphenylmethane diisocyanate (optionally in admixture with its 2,4'-isomer), 2,4'-and 4,4'-dicyclohexylmethane diisocyanate, 1-isocyanato-3-isocyanato-methyl-3,3,5-trimethylcyclohexane (or isophorone diisocyanate), etc.

A preferred diisocyanate of general formula (II) is 2,4-toluene diisocyanate (TDI), either alone or in admixture with (preferably at least 20% by weight) of 2,6-isomer and 4,4'-diphenyl-methane diisocyanate (MDI), either alone or in admixture with (preferably at least 5% by weight) of 2,4'-isomer.

A non-distilled or crude toluene diisocyanate, i.e., a partially purified toluene diisocyanate withdrawn from any tray of a distillation column, may also be utilized.

As an alternative it is possible to use medium or high molecular weight polyisocyanates having different degrees of condensation and being obtained through the phosgenation of aniline-formaldehyde condensates. These products are composed of mixtures of polymethylene-polyphenyl polyisocyanates having general formula (III): 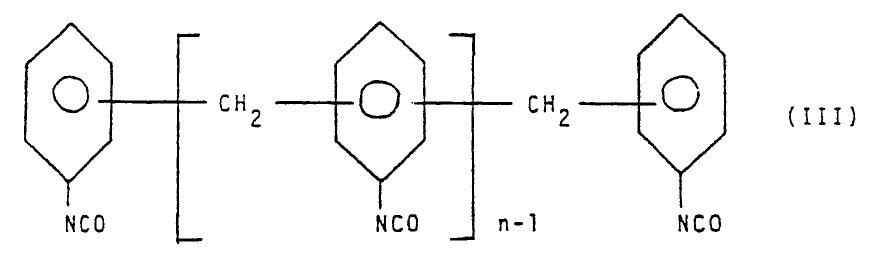 where n represents an integer higher than or equal to 1.

Preferred medium and high molecular weight polyisocyanates are mixtures of polymethylene-polyphenyl polyisocyanates having an average functionality of from 2.6 to 2.8; such products are marketed under various trade names, e.g., Tedimon® 31 (Montedipe), Suprasec® DNR (ICI) and Desmodur® 44 V20 (Bayer).

Further examples of polyisocyanates suitable for the process of the present invention are the isocyanic prepolymers prepared by reacting polyisocyanates of the above formulae (II) and (III) with an understoichiometric amount of:
(i) polyols, polyethers and/or polyesters having a hydroxyl or amino functionality of at least 2 and an average molecular weight ranging from 60 to about 8,000; and/or
(ii) reactive products (c) of general formula (I).

The compound (b) containing activated terminal hydrogen atoms comprises at least one polyether polyol. Examples of (polyether) polyols are those of low molecular weight which contain at least two activated hydrogen atoms such as glycols, triols, tetrols, polyamines and alkanolamines of general formula (I), or mixtures thereof. Illustrative examples are dipropylene glycol, 1,4-butylene glycol, glycerine, trimethylolpropane, pentaerythritol, sorbitol, ethylenediamine, triethanolamine, etc.

Further examples of polyols are the polyether polyols having a high average molecular weight, for example from about 500 to about 8,000, and a hydroxyl and/or amino functionality of at least 2, e.g., obtained from the condensation of C₂-C₆ alkylene oxides with starters having at least two activated hydrogen atoms (like those listed hereinabove). Preferred high molecular weight polyols are those obtained from reactive aminic starters of general formula (I) condensed with ethylene oxide and/or propylene oxide, optionally in admixture with other polyols obtained from the condensation of ethylene oxide and/ or propylene oxide with starters of the non-aminic type.

The hydrofluoroalkanes and/or perfluoroalkanes utilized in the process of the present invention are preferably those with 1 or 2 carbon atoms. Examples of such products are: 1,1,1,2-tetrafluoroethane (boiling point (b.p. -24°C), pentafluoroethane (b.p. -48.5°C), trifluoromethane (b.p. -82°C), 1,1,2-trifluoroethane (b.p. -0.5°C), 1,1-difluoroethane (b.p. -24.7°C), 1,2-difluoroethane (b.p. +30.7°C), monofluoroethane (b.p. -37.1°C), tetrafluoromethane (b.p. -128°C), hexafluoroethane (b.p. -78.2°C) etc., and isomers thereof.

A preferred hydrofluoroalkane for the process of the present invention is 1,1,1,2-tetrafluoroethane.

In addition to the above-mentioned components, further additives can be present such as, for example, catalysts, stabilizers, pigments, crosslinking agents, etc. the use whereof is illustrated and described in the literature, e.g. in Saunders and Frisch, "Polyurethanes, Chemistry and Technology", Interscience, New York, 1964.

Thus, the present process leads to formed articles made of polyurethane foams.

Preferred articles made of polyurethane foams are those obtained in the presence of an expanding medium which also comprises water.

The formed articles may be utilized in the fields of refrigeration, thermal insulation, furnishings, transportation, electric househould appliances, office machines and the like.

Examples of formed articles are insulating structures, panels, casings for electric household appliances and office machines, seats for furnishings or transportation, armrests for chairs and armchairs, inner components for automobiles such as head-rests and instrument boards, etc.

In particular, the formed articles of polyurethane foams are all those articles which usually are obtainable by means of CFC 11 as foaming agent, for example those obtainable from a continuous or discontinuous block, the molded, semirigid, low, medium and high density articles which are optionally classifiable also in the field of microcellular elastomeric products, RIM products, and "integral skin" products, etc.

The formed articles are preparable by continuous, discontinuous or semicontinuous methods and exhibit, in comparison with analogous articles manufactured from foams expanded only with CO₂, the following advantages:
a) In the field of rigid foams:
   - drastic reduction in the exothermicity of the polymerization process;
   - lower polyisocyanate consumption;
   - absence of surface friability of the foam and higher adhesion to the substrates;
   - dimensional stability of the foam under the action of heat;
   - lower initial thermal conductivity;
   - lower increase in the thermal conductivity over time (which is of the same order of magnitude as that of the articles obtained with CFC 11).
b) In the field of flexible foams:
   - a more regular and homogeneous formation of the foams with open cells and high transpirability;
   - possibility of obtaining low density and low bearing capacity foams, i.e. having a density (D) ≤ 35 kg/m³ and a bearing capacity ≤ 150 N at 40% of compression, according to ISO 2439;
   - low or no risk of thermal degradation;
   - possibility of obtaining polyurethane surface thickening, typical of the "integral skin" foams;
   - elimination of any problem connected with the compatibility between water and reactive system.

The following non-limitative examples are to further illustrate the present invention. In said examples, unless otherwise specified, all parts are parts by weight.

### EXAMPLE 1 (not part of the invention)

A polyol composition containing:
a) 80 parts by weight of a conventional polyether polyol based on sorbitol (starter) and propylene oxide and having a hydroxyl number of 490 mg KOH/g;
b) 20 parts by weight of a polyol obtained from the condensation of propylene oxide with ethylene diamine and having a hydroxyl number of 560 mg KOH/g; and
c) 2 parts of water;
was introduced into a tank equipped with a helical screw agitator suited for containing mixtures under pressure.

28 parts of liquid 1,1,1,2-tetrafluoroethane were added and solubilized in the polyol composition (initial pressure = 6 bars) at a temperature of about 20°C.

After 1 hour the pressure had decreased to about 3.5 bars.

Upon completion of the solubilization of the expanding medium, the homogeneous and stable polyol mixture was transferred into the tank of a high pressure foaming machine.

130 parts of this mixture were reacted with 157 parts of polymeric MDI (Tedimon® 31) in the presence of an amine catalyst and a silicone surfactant, according to conventional methods, thereby obtaining, in a closed mould, a rigid closed-cell polyurethane foam having the following characteristics:

| | |
|---|---|
| density = | 35 kg/m³ |
| density in free growth = | 24 kg/m³ |
| maximum compression strength = | 157 kPa |
| closed cells = | 94% |
| compression strength at 10% of deflection = | 125 kPa |
| thermal conductivity = | 0.0210 W/mK |

### EXAMPLE 2 (comparative)

There was utilized a composition analogous to that of example 1, but without polyol having structural units of the amine type, adding, into the foaming machine tank, at a temperature of 20°C, 20 parts, calculated on the polyol, of liquid 1,1,1,2-tetrafluoroethane. It was observed that also after extended periods of time (15 hours) the pressure decreased only slightly as compared with the initial pressure, wherefore the system was caused to react when the pressure in the tank was still about 6 bars.

In a further test utilizing the same formulation, 1,1,1,2-tetrafluoroethane was directly fed to the mixing head of the foaming machine.

In both cases, non-homogeneous rigid foams of coarse appearance were obtained, which were not suitable for industrial purposes.

### EXAMPLE 3 (not part of the invention)

100 parts of a polyether triol (starter: glycerine) based on propylene oxide and ethylene oxide and having a OH number of 28 mg KOH/g and about 15% of primary terminal hydroxy groups, were mixed with 12.5 parts of a polyol obtained from the condensation of ortho-toluenediamine (starter) with propylene oxide and ethylene oxide and having a OH number of 300 mg KOH/g, 3.2 parts of water and 12 parts of liquid 1,1,1,2-tetrafluoro-ethane in a stirred container capable of maintaining mixtures under pressure (initial pressure of about 6 bars).

After about 0.5 hours the pressure decreased to 2.5 bars and the whole mixture was transferred into the tank of a high pressure foaming machine.

127.7 parts of this mixture were reacted with 44 parts of a 70/30 mixture of polymeric TDI/MDI (Tedimon® 80/Tedimon® 31) in the presence of an amine catalyst and a cell regulator, according to conventional methods. Then the resulting mixture was poured into a mould for the production of automobile seats, maintained at a temperature of 45°C.

After about 5 minutes, an article having the required shape, dimensions and weight was withdrawn; it exhibited the following physical properties:

| | |
|---|---|
| density = | 40 kg/m³ |
| density in free growth = | 25 kg/m³ |
| bearing capacity at 40% of compression (ISO 2439) = | 110 N |
| elongation at break = | 100% |
| compression set (22 h x 70°C at 50% RH) = | 9% |
| open cells = | 80% |
| resilience (ball rebound) = | 50% |
| sag factor = | 3 |

## Claims

1. Process for preparing articles made of polyurethane foams, which comprises reacting at least one polyisocyanate (a) with at least one polyether polyol (b) containing activated terminal hydrogen atoms in the presence of an expanding medium which consists of at least one hydrofluoroalkane and/or perfluoroalkane, possibly in admixture with water and of a product (c) of the general formula (I): 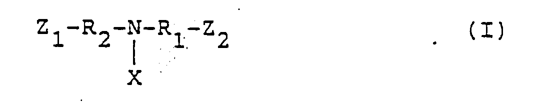 wherein
X represents hydrogen, Z₁-R₂- or Z₂-R₁-;
Z₁ and Z₂, the same or different from each other, represent hydrogen, OH, NH₂ and NHR₃, R₃ being an alkyl, cycloalkyl, aryl or alkylaryl radical having from 1 to 12 carbon atoms; and
R₁ and R₂, the sane or different from each other, represent an alkylene, cycloalkylene, arylene or alkylarylene radical containing 1 to 20 carbon atoms or are polyoxyalkylene chains having an average molecular weight of from 60 to 8,000, the alkylene groups containing from 1 to 4 carbon atoms, dimethyl cyclohexylamine being excluded from product (c), which product (c) is
chemically bound or present in free form in one of the two polyurethane reactants and is employed in amounts such that the amino group is present at a concentration of at least 0.03 mols, preferably at least 0.05 mols, per 100 g of the component in which the expanding medium is dissolved, said expanding medium being dissolved in said one of said two polyurethane reactants.

2. Process according to claim 1, wherein the expanding medium is dissolved in compound (b).

3. Process according to any one of claims 1 and 2, wherein the expanding medium is added to one of the polyurethane reactants in amounts of at least 1 part by weight per 100 parts by weight of polyurethane reactant, particularly in amounts of from 5 to 50 parts.

4. Process according to any one of the preceding claims, wherein the dissolution step is conducted in a closed vessel, by operating continuously, semicontinuously or discontinuously, at room temperature and by feeding hydrofluoroalkane and/or perfluoroalkane in the liquid state.

5. Process according to any one of the preceding claims, wherein the polyisocyanates (a) are selected from low molecular weight diisocyanates of general formula (II):
OCN-R-NCO (II)
where R represents an aliphatic, cycloaliphatic, aromatic, optionally alkyl-substituted radical having 1 to 30 carbon atoms;
or are medium or high molecular weight polyisocyanates of different degrees of condensation, obtained through the phosgenation of aniline-formaldehyde condensates and consisting of mixtures of polymethylene-polyphenyl polyisocyanates having general formula (III): 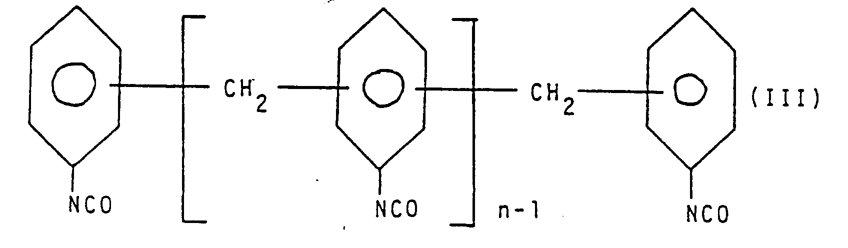 where n represents an integer of at least 1;
or are isocyanate prepolymers obtained by reacting the above polyisocyanates of formulae (II) and (III) with an understoichiometric amount of
(i) polyols, polyethers and/or polyesters having a hydroxyl and/or amine functionality of at least 2 and an average molecular weight of from 60 to 8,000; and/or
(ii) products (c) of general formula (I) as given in claim 1.

6. Process according to any one of the preceding claims, wherein the hydrofluoroalkanes and/or perfluoroalkanes are those having 1 or 2 carbon atoms, the hydrofluoroalkane being preferably 1,1,1,2-tetrafluoroethane.

7. Process according to any one of the preceding claims, wherein the expanding medium dissolution step is carried out in a closed vessel under an initial pressure close to the feeding pressure of said expanding medium, and wherein stirring is maintained and continued, either continuously or discontinuously, for a period of time sufficient to cause a pressure reduction by absorption of the expanding medium into the polyurethane reactant.

8. Homogeneous and stable mixtures comprising at least one polyurethane reactant, at least one hydrofluoroalkane and/or perfluoroalkane and a product (c) of the general formula (I): 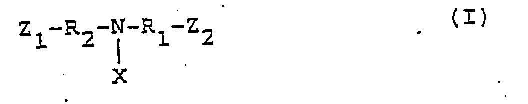 wherein
X represents hydrogen. Z₁-R₂- or Z₂-R₁-;
Z₁ and Z₂, the same or different from each other, represent hydrogen, OH, NH₂ and NHR₃, R₃ being an alkyl, cycloalkyl, aryl or alkylaryl radical having from 1 to 12 carbon atoms; and
R₁ and R₂, the same or different from each other, represent an alkylene, cycloalkylene, arylene or alkylarylene radical containing 1 to 20 carbon atoms or are polyoxyalkylene chains having an average molecular weight of from 60 to 8,000, the alkylene groups containing from 1 to 4 carbon atoms, dimethyl cyclohexylamine being excluded from product (c), which product (c) contains at least one amino group and is
chemically bound or present in free form in said polyurethane reactant and is employed in amounts such that the amino group is present at a concentration of at least 0.03 mols, preferably at least 0.05 mols, per 100 g of the component in which the expanding medium is dissolved, said expanding medium being dissolved in said polyurethane reactant. being a polyether polyol (b) containing activated terminal hydrogen atoms.

9. Mixtures according to claim 8, having a vapour tension lower than 0.4 MPa (4 bars) at 20°C.

## Patentansprüche

1. Verfahren zur Herstellung von Artikeln aus Polyurethanschäumen, das die Umsetzung umfaßt von wenigstens einem Polyisocyanat (a) mit wenigstens einem Polyetherpolyol (b), das aktivierte terminale Wasserstoffatome enthält, in Anwesenheit eines Blähmittels, das wenigstens aus einem Hydrofluoralkan und/oder Perfluoralkan besteht, möglicherweise unter Beimischung von Wasser, und eines Produkts (c) der allgemeinen Formel (I): 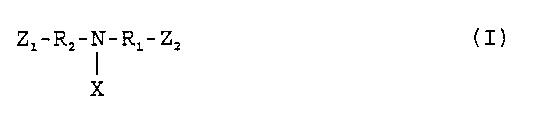 worin
X Wasserstoff, Z₁-R₂- oder Z₂-R₁- bedeutet;
Z₁ und Z₂, die gleich oder verschieden sein können, für Wasserstoff, OH, NH₂ und NHR₃ stehen, wobei R₃ ein Alkyl-, Cycloalkyl-, Aryl- oder Alkylarylrest mit 1 bis 12 Kohlenstoffatomen ist; und
R₁ und R₂, die gleich oder verschieden sein können, für einen Alkylen-, Cycloalkylen-, Arylen- oder Alkylarylenrest mit 1 bis 20 Kohlenstoffatomen stehen oder Polyoxyalkylenketten mit einem durchschnittlichen Molekulargewicht von 60 bis 8000 sind, deren Alkylengruppen 1 bis 4 Kohlenstoffatome enthalten, wobei Dimethylcyclohexylamin als Produkt (c) ausgenommen ist,
wobei das Produkt (c) in einem der beiden Polyurethanreaktanten chemisch gebunden ist oder in freier Form vorliegt und in solchen Mengen eingesetzt wird, daß die Aminogruppe in einer Konzentration von wenigstens 0,03 Mol, vorzugsweise wenigstens 0,05 Mol, pro 100 g der Komponente vorliegt, in der das Blähmittel gelöst ist, wobei dieses Blähmittel in einem der beiden Polyurethanreaktanten gelöst ist.

2. Verfahren nach Anspruch 1, worin das Blähmittel in Verbindung (b) gelöst ist.

3. Verfahren nach irgendeinem der Ansprüche 1 und 2, worin das Blähmittel einem der Polyurethanreaktanten in Mengen von wenigstens 1 Gewichtsteil pro 100 Gewichtsteilen Polyurethanreaktant zugegeben wird, insbesondere in Mengen von 5 bis 50 Teilen.

4. Verfahren nach irgendeinem der vorhergehenden Ansprüche, worin der Lösungsschritt in einem geschlossenen Gefäß, bei kontinuierlicher, semikontinuierlicher oder diskontinuierlicher Arbeitsweise, bei Raumtemperatur und unter Einspeisung des Hydrofluoralkans und/oder Perfluoralkans im flüssigen Zustand durchgeführt wird.

5. Verfahren nach irgendeinem der vorhergehenden Ansprüche, worin die Polyisocyanate (a) aus niedermolekularen Diisocyanaten der allgemeinen Formel (II):
OCN-R-NCO (II)
ausgewählt sind, worin R für einen aliphatischen, cycloaliphatischen oder gegebenenfalls alkylsubstituierten aromatischen Rest mit 1 bis 30 Kohlenstoffatomen steht;
oder mittelmolekulare oder hochmolekulare Polyisocyanate mit verschiedenen Kondensationsgraden sind, die durch die Phosgenierung von Anilin-Formaldehyd-Kondensaten erhalten wurden und aus Mischungen von Polymethylen-Polyphenylpolyisocyanaten der allgemeinen Formel (III) bestehen: 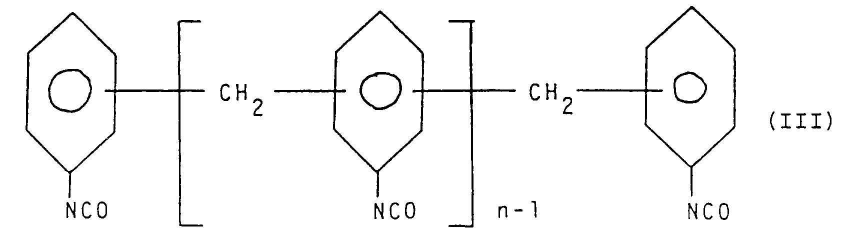 worin n eine ganze Zahl von wenigstens 1 bedeutet;
oder Isocyanat-Prepolymere sind, die erhalten wurden durch Umsetzung der obigen Polyisocyanate der Formeln (II) und (III) mit einer unterstöchiometrischen Menge von
(i) Polyolen, Polyethern und/oder Polyestern mit einer Hydroxyl- und/oder Aminfunktionalität von wenigstens 2 und einem durchschnittlichen Molekulargewicht von 60 bis 8000; und/oder
(ii) Produkten (c) der allgemeinen Formel (I), wie definiert in Anspruch 1.

6. Verfahren nach irgendeinem der vorhergehenden Ansprüche, worin die Hydrofluoralkane und/oder Perfluoralkane solche mit 1 oder 2 Kohlenstoffatomen sind, wobei das Hydrofluoralkan vorzugsweise 1,1,1,2-Tetrafluorethan ist.

7. Verfahren nach irgendeinem der vorhergehenden Ansprüche, worin der Lösungsschritt für das Blähmittel in einem geschlossenen Gefäß unter einem Anfangsdruck nahe dem Einspeisungsdruck für das Blähmittel durchgeführt wird, und wobei das Rühren, entweder kontinuierlich oder diskontinuierlich über einen Zeitraum beibehalten und fortgesetzt wird, der ausreicht, um als Folge der Absorption des Blähmittels im Polyurethanreaktanten eine Druckreduzierung zu bewirken.

8. Homogene und stabile Mischungen, umfassend wenigstens einen Polyurethanreaktanten, wenigstens ein Hydrofluoralkan und/oder Perfluoralkan und ein Produkt (c) der allgemeinen Formel (I): 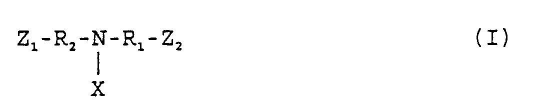 worin
X Wasserstoff, Z₁-R₂- oder Z₂-R₁- bedeutet;
Z₁ und Z₂, die gleich oder verschieden sein können, für Wasserstoff, OH, NH₂ und NHR₃ stehen, wobei R₃ ein Alkyl-, Cycloalkyl-, Aryl- oder Alkylarylrest mit 1 bis 12 Kohlenstoffatomen ist; und
R₁ und R₂, die gleich oder verschieden sein können, für einen Alkylen-, Cycloalkylen-, Arylen- oder Alkylarylenrest mit 1 bis 20 Kohlenstoffatomen stehen oder Polyoxyalkylenketten mit einem durchschnittlichen Molekulargewicht von 60 bis 8000 sind, deren Alkylengruppen 1 bis 4 Kohlenstoffatome enthalten, wobei Dimethylcyclohexylamin als Produkt (c) ausgenommen ist,
wobei das Produkt (c) wenigstens eine Aminogruppe enthält und in dem Polyurethanreaktanten chemisch gebunden ist oder in freier Form vorliegt und in solchen Mengen eingesetzt wird, daß die Aminogruppe in einer Konzentration von wenigstens 0,03 Mol, vorzugsweise wenigstens 0,05 Mol, pro 100 g der Komponente vorliegt, in der das Blähmittel gelöst ist, wobei dieses Blähmittel in dem Polyurethanreaktanten gelöst ist, welcher ein Polyetherpolyol (b) ist, das aktivierte terminale Wasserstoffatome enthält.

9. Mischungen nach Anspruch 8 mit einer Dampfspannung von weniger als 0,4 MPa (4 bar) bei 20°C.

## Revendications

1. Procédé de préparation d'articles en mousse de polyuréthane, qui comprend la réaction d'au moins un polyisocyanate (a) avec au moins un polyéther-polyol (b) contenant des atomes d'hydrogène terminaux actifs, en présence d'un agent d'expansion qui est constitué d'au moins un hydrofluoroalcane et/ou un perfluoroalcane éventuellement en mélange avec de l'eau, et d'un produit (c) de formule générale (I) : 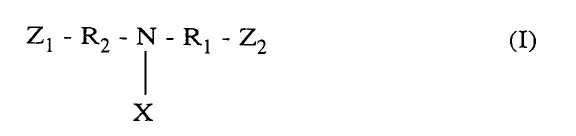 dans laquelle
X représente un atome d'hydrogène ou un groupe Z₁-R₂- ou Z₂-R₁-,
Z₁ et Z₂ sont identiques ou différents et représentent chacun un atome d'hydrogène ou un groupe OH, NH₂ ou NHR₃, R₃ désignant un groupe alkyle, cycloalkyle, aryle ou alkylaryle, ayant de 1 à 12 atomes de carbone, et
R₁ et R₂ sont identiques ou différents et représentent chacun un groupe alkylène, cycloalkylène, arylène ou alkylarylène, contenant 1 à 20 atomes de carbone, ou une chaîne polyoxyalkylène ayant une une masse moléculaire moyenne de 60 à 8000, les groupes alkylène contenant 1 à 4 atomes de carbone,
la diméthylcyclohexylamine étant exclue des produits (c) et ledit produit (c) étant lié chimiquement ou présent sous forme libre dans l'un des deux réactifs pour polyuréthane et étant utilisé en des quantités telles que le groupe amino est présent à une concentration d'au moins 0,03 mole, de préférence au moins 0,05 mole, pour 100 g du constituant dans lequel l'agent d'expansion est dissous, ledit agent d'expansion étant dissous dans l'un desdits deux réactifs pour polyuréthane.

2. Procédé selon la revendication 1, dans lequel l'agent d'expansion est dissous dans le composé (b).

3. Procédé selon la revendication 1 ou 2, dans lequel l'agent d'expansion est ajouté à l'un des réactifs pour polyuréthane, en une quantité d'au moins 1 partie en poids pour 100 parties en poids de réactif pour polyuréthane, en particulier en une quantité de 5 à 50 parties.

4. Procédé selon l'une quelconque des revendications précédentes, dans lequel on réalise l'étape de dissolution dans un récipient fermé, en opérant de manière continue, semi-continue ou discontinue, à la température ordinaire, et en introduisant l'hydrofluoroalcane et/ou le perfluoroalcane à l'état liquide.

5. Procédé selon l'une quelconque des revendications précédentes, dans lequel les polyisocyanates (a) sont choisis parmi les diisocyanates de faible masse moléculaire de formule générale (II) :
OCN-R-NCO (II)
dans laquelle R représente un groupe aliphatique, cycloaliphatique ou aromatique, ayant 1 à 30 atomes de carbone et éventuellement substitué par un groupe alkyle,
ou bien sont des polyisocyanates de masse moléculaire moyenne ou élevée, de différents degrés de condensation, obtenus par phosgénation de condensats aniline-formaldéhyde et constitués de mélanges de polyméthylène-polyphényl-polyisocyanates répondant à la formule générale (III) : 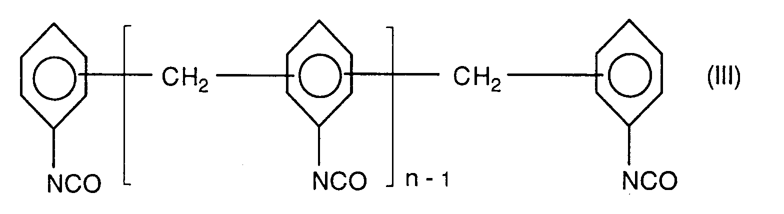 dans laquelle n représente un nombre entier égal à au moins 1,
ou bien sont des prépolymères isocyanates obtenus par réaction des polyisocyanates précédents de formules (II) et (III) avec une quantité substoechiométrique de :
(i) un polyol, un polyéther et/ou un polyester, ayant une fonctionnalité hydroxyle et/ou amine d'au moins 2 et une masse moléculaire moyenne de 60 à 8000, et/ou
(ii) un produit (c) de formule générale (I) tel qu'indiqué dans la revendication 1.

6. Procédé selon l'une quelconque des revendications précédentes, dans lequel les hydrofluoroalcanes et/ou les perfluoroalcanes sont ceux ayant 1 ou 2 atomes de carbone, l'hydrofluoroalcane étant de préférence le 1,1,1,2-tétrafluoroéthane.

7. Procédé selon l'une quelconque des revendications précédentes, dans lequel on réalise l'étape de dissolution de l'agent d'expansion dans un récipient fermé, sous une pression initiale proche de la pression d'introduction dudit agent d'expansion, et on maintient et poursuit l'agitation, de manière continue ou discontinue, pendant une durée suffisante pour provoquer une diminution de la pression par absorption de l'agent d'expansion dans le réactif pour polyuréthane.

8. Mélanges homogènes stables, comprenant au moins un réactif pour polyuréthane, au moins un hydrofluoroalcane et/ou un perfluoroalcane, et un produit (c) de formule générale (I) : 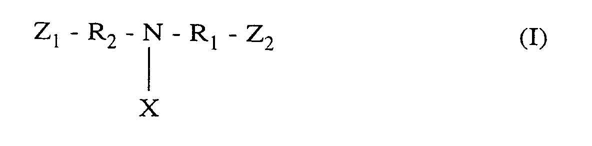 dans laquelle
X représente un atome d'hydrogène ou un groupe Z₁-R₂- ou
Z₁ et Z₂ sont identiques ou différents et représentent chacun un atome d'hydrogène ou un groupe OH, NH₂ ou NHR₃, R₃ désignant un groupe alkyle, cycloalkyle, aryle ou alkylaryle, ayant de 1 à 12 atomes de carbone, et
R₁ et R₂ sont identiques ou différents et représentent chacun un groupe alkylène, cycloalkylène, arylène ou alkylarylène, contenant 1 à 20 atomes de carbone, ou une chaîne polyoxyalkylène ayant une masse moléculaire moyenne de 60 à 8000, les groupes alkylène contenant 1 à 4 atomes de carbone,
la diméthylcyclohexylamine étant exclue des produits (c) et ledit produit (c) contenant au moins un groupe amino et étant lié chimiquement ou présent sous forme libre dans ledit réactif pour polyuréthane et étant utilisé en une quantité telle que le groupe amino est présent à une concentration d'au moins 0,03 mole, de préférence au moins 0,05 mole, pour 100 g du constituant dans lequel l'agent d'expansion est dissous, ledit agent d'expansion étant dissous dans ledit réactif pour polyuréthane qui est un polyéther-polyol (b) contenant des atomes d'hydrogène terminaux actifs.

9. Mélanges selon la revendication 8, qui ont une tension de vapeur inférieure à 0,4 MPa (4 bars) à 20°C.
